(19) Europäisches Patentamt
European Patent Office
Office européen des brevets

(11) EP 3 403 854 A1

(12) **EUROPEAN PATENT APPLICATION**
published in accordance with Art. 153(4) EPC

(43) Date of publication:
21.11.2018 Bulletin 2018/47

(51) Int Cl.:
*B60C 15/06* (2006.01)   *B60C 1/00* (2006.01)
*B60C 9/00* (2006.01)   *B60C 9/18* (2006.01)
*B60C 11/00* (2006.01)   *B60C 19/00* (2006.01)
*B60C 19/08* (2006.01)   *C08K 3/04* (2006.01)
*C08L 17/00* (2006.01)   *D02G 3/44* (2006.01)
*D07B 1/02* (2006.01)

(21) Application number: 17738573.9

(22) Date of filing: 13.01.2017

(86) International application number:
PCT/JP2017/001138

(87) International publication number:
WO 2017/122821 (20.07.2017 Gazette 2017/29)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 13.01.2016   JP 2016004823
31.05.2016   JP 2016109544

(71) Applicant: Bridgestone Corporation
Tokyo 104-8340 (JP)

(72) Inventors:
• YANAGIOKA, Masaki
  Tokyo 104-8340 (JP)
• YOKOKURA, Hiroyuki
  Tokyo 104-8340 (JP)
• YONEMOTO, Makiko
  Tokyo 104-8340 (JP)

(74) Representative: Oxley, Robin John George
Marks & Clerk LLP
90 Long Acre
London WC2E 9RA (GB)

(54) **PNEUMATIC TIRE**

(57) Provided is a pneumatic tire in which an electric resistance can be reduced without adversely affecting other performances such as tire durability or manufacturing processes even when low loss of a rubber member of the tire is attempted. The pneumatic tire includes a belt layer 2 provided at an outer side of a crown portion of a carcass 1 in a tire radial direction, and a rubber chafer 4 is provided at an outer surface of a bead portion in a tire width direction. A cushion rubber 13C and a tread rubber 13G are sequentially provided at an outer side of the belt layer in the tire radial direction, and a composite fiber 3 containing a conductive fiber and a non-conductive fiber extends at least from the bead portion to a position in contact with the cushion rubber or a belt under cushion arranged at an outer end portion of the belt layer in the tire width direction in such a manner as to be exposed on at least one surface the carcass at either the outer and inner sides of the tire, and the rubber chafer contains a carbon black having a nitrogen adsorption specific surface area of 30 to 43 $m^2$/g.

FIG.1

**Description**

TECHNICAL FIELD

The present invention relates to a pneumatic tire, and more particularly to a pneumatic tire (hereinafter also simply referred to as "tire") in which a conductivity is improved.

BACKGROUND ART

In recent years, as demands for low fuel consumption of a tire increase, a rolling resistance has been reduced due to making rubber members of a tire low loss, in not only a tread rubber but also a case member such as a side rubber. However, when a large amount of silica is added in place of carbon black or when an amount of added carbon black is reduced by increasing a particle size of the carbon black for the purpose of low loss of a rubber for a tire, an electric resistance value of a rubber increases. Accordingly, when the entirety of a rubber composition to be used for a tire is made low loss, an electric resistance of the tire increases, and which leads to radio noises, generation of static electricity when a door of a vehicle is opened or closed, or the like, and thus a technique for reducing the electric resistance of a tire is demanded.

To reduce the electric resistance of a tire, it can be considered to make a part of members to be high loss, but in such a case, the rolling resistance deteriorates, and thus it has been desired to improve the balance between the degree of making the rubber low loss and the electric resistance. In view of the above, conventionally, a variety of attempts to reduce an electric resistance of a tire by providing conductive fibers have been made. For example, Patent Document 1 discloses, as an electrically conductive tire which can ground static electricity generated on a vehicle body smoothly on a road surface, an electrically conductive tire in which carcass cords of a carcass ply the nearest to a breaker among carcass plies and breaker cords are each formed by an assembly composed of at least one metal filament and a large number of organic fiber filaments.

Further, Patent Document 2 discloses a technique for allowing 10-150 parts by mass of silica to be contained per 100 parts by mass of rubber components which contains a butadiene rubber modified by a predetermined compound for the purpose of providing a rubber composition for a chafer or a clinch having an excellent low heat generating property and a high strength, and a pneumatic tire obtained therefrom.

RELATED ART DOCUMENTS

PATENT DOCUMENTS

     Patent Document 1: JPH3-169711A (claims, etc.)
     Patent Document 2: JP2010-116447A (claims, etc.)

SUMMARY OF THE INVENTION

PROBLEMS TO BE SOLVED BY THE INVENTION

As described above, conventionally, a large number of attempts to reduce an electric resistance of a tire have been made unsatisfactorily. For example, to a tire outer skin member such as a tread and a sidewall, a conductive material is added, thereby being capable of reducing an electric resistance, whereas, in general, in a case of a rubber chafer which requires a crack growth resistance, when higher carbon such as high abrasion furnace (HAF) is added, an electric resistance is reduced but a low loss property also deteriorates. On the other hand, there has been a problem that a conductive material such as a carbon nanotube (CNT) and a ketjen black is added, an abrasion resistance property decreases and a rim deviation resistance property deteriorates so that durability as a tire deteriorates. Further, when a large amount of silica is added, a low loss property and an abrasion resistance property can be compatibly attempted but there has been a room for improvement in extrusion property, molding property (tackiness), and the like.

Further, for example, as in Patent Document 1 as described above, when a metal fiber is used for a carcass cord, there arise problems, such as decrease in durability and considerable deterioration in productivity due to the application of an inelastic fiber. Accordingly, establishment of a technique capable of reducing an electric resistance of a tire without largely changing a variety of performances or manufacturing processes required for a tire has been demanded. In addition, in Patent Document 2, a low loss property and an abrasion resistance property with respect to a rim can be compatible, whereas there has been a room for improvement in extrusion property and molding property such as tackiness.

Accordingly, an object of the present invention is to solve the above problems and to provide a pneumatic tire in which an electric resistance can be reduced without adversely affecting other performances such as tire durability or manufacturing processes even when low loss of a rubber member of the tire is attempted.

MEANS FOR SOLVING THE PROBLEMS

The present inventors intensively studied to find out that a conductivity of a tire can be improved by arranging a composite fiber containing a conductive fiber and a non-conductive fiber inside the tire. Further, the present inventors found out that it is important to expose the composite fiber on at least one of surfaces of a carcass ply and add to a rubber chafer a predetermined carbon black in order to secure a conductive path inside the tire, thereby completing the present invention. Note that the composite fiber herein refers to a fiber composed of a plurality of different kinds of fibers.

In other words, the present invention provides a pneumatic tire including: a carcass, as a skeletal structure, composed of at least one carcass ply extending toroidally between a pair of bead portions; and at least one belt layer provided at an outer side of a crown portion of the carcass in a tire radial direction, in which a rubber chafer is provided at an outer surface of the bead portion in a tire width direction,

in which a cushion rubber and a tread rubber forming a tread portion are sequentially provided at an outer side of the belt layer in the tire radial direction, and a composite fiber containing a conductive fiber and a non-conductive fiber extends at least from the bead portion to a position in contact with the cushion rubber or a belt under cushion arranged at an outer end portion of the belt layer in the tire width direction in such a manner as to be exposed on at least one surface of the carcass at either the outer and inner sides of the tire, and the rubber chafer contains a carbon black having a nitrogen adsorption specific surface area of 30 to 43 $m^2$/g.

In the present invention, the rubber chafer preferably contains a reclaimed rubber. Moreover, in the present invention, the rubber chafer preferably contains 64 to 73 parts by mass of the carbon black per 100 parts by mass of rubber components, and 3 to 10 parts by mass of the reclaimed rubber per 100 parts by mass of rubber components of the rubber chafer are also preferably contained. Further, preferably, the composite fiber is arranged in such a manner as to be exposed on both surfaces of the carcass at the outer and inner sides of the tire. Still further, in the present invention, a portion at which the composite fiber is exposed on a tire outer side and a portion at which the composite fiber is exposed on a tire inner side are preferably connected with each other at least one location.

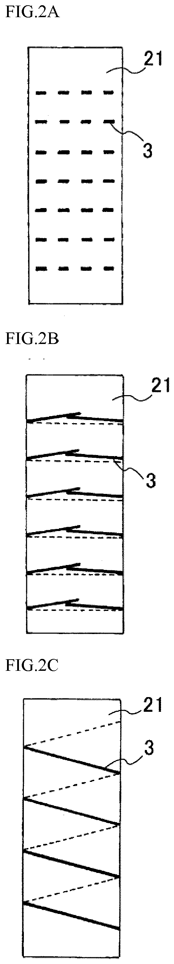

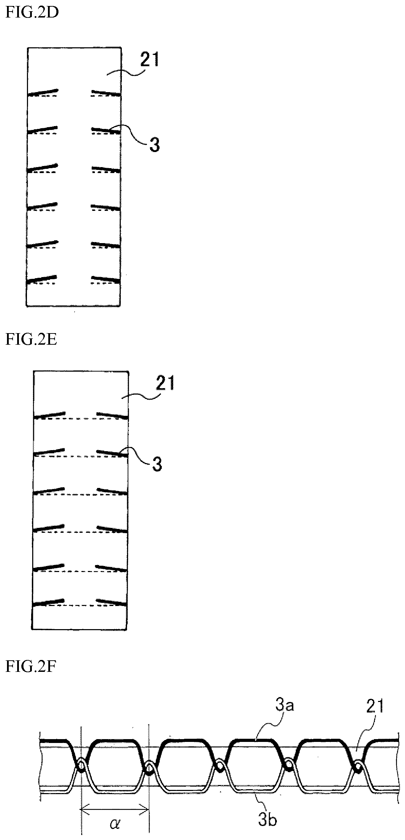

Still further, in the present invention, preferably, the non-conductive fiber is made of an organic material and the composite fiber contains 50% or more by mass of the non-conductive fiber. Moreover, in the present invention, preferably, the composite fiber is sewn to the carcass, and in this case, preferably, a sewing pitch of the composite fiber is 2 to 40 mm. Note that the sewing pitch herein refers to a distance corresponding to one stitch when a composite fiber is sewn to a carcass, and corresponds to $\alpha$ in FIG. 2F as described below. The sewing pitch may be uniform or not uniform as long as it falls within the above range but is desirably uniform. Moreover, unless otherwise specifically noted, the sewing pitch herein refers to an average value of individual pitches. Further, in the present invention, the composite fiber is also preferably wound around the carcass, and specifically, the composite fiber is wound around the carcass from a position in contact with one end of the cushion rubber or the belt under cushion in the tire width direction via the bead portion through a tire inner side of the carcass to the other end of the cushion rubber or the belt under cushion in the tire width direction. Further, also preferably, a rubber chafer is provided at an outer surface of the bead portion in the tire width direction, the carcass includes a main body portion extending between the pair of bead portions and turn-up portions each turned up and curled up from the inside to the outside of the tire around a bead core embedded in each of the pair of bead portions, and the composite fiber is wound around the carcass from a position outside of one of the turn-up portions in the tire width direction and in contact with the rubber chafer via an inner side of the turn-up portion in the tire width direction and an outer side of the main body portion in the tire width direction through a tire outer side of the carcass to a position outside of the other turn-up portion in the tire width direction and in contact with the rubber chafer. The composite fiber can be also spirally wound around the carcass. In this case, a winding pitch of the composite fiber is preferably 1 to 12 times/m. Note that the winding pitch herein refers to the number of composite fibers wound per unit length along the tire circumferential direction of a carcass ply. Measurement of the winding pitch is performed at a ply end portion when the composite fiber is wound only around end portions of the carcass in the tire width direction, and is performed on a surface of the ply on a tire equator line CL when the composite fiber is wound around the entirety of the carcass in the tire width direction. Further, a starting point of the measurement is on the composite fiber. Still further, in the present invention, the composite fiber is preferably arranged in a tire circumferential direction at an end count of 0.04 times/5 cm or more. Note that the end count herein refers to the number of the composite fibers present per unit length in the tire circumferential direction. Measurement of the end count is performed at a ply end when the composite fiber is wound only around the end portions of the carcass in the tire width direction, and is performed on a surface of the ply on the tire equator line CL when the composite fiber is wound around the entirety of the carcass in the tire width direction. Further, a starting point of the measurement is on the composite fiber. Note that when the composite fiber is sewn to the ply as illustrated in FIG. 2A as described below, the composite fiber is to be measured when the composite fiber is present on a measurement line, regardless of whether or not the composite fiber appears on a ply surface.

Still further, in the tire of the present invention, it is possible that a bleeder cord extends at least from the pair of bead portions to a position in contact with the cushion rubber or the belt under cushion, and the composite fiber is arranged in place of 3 to 100% by mass of the bleeder cord.

Still further, in the present invention, a fineness of the composite fiber is preferably 20 to 1,000 dtex. Still further, the composite fiber is arranged preferably at an angle of 30 to 150° with respect to the tire circumferential direction, more preferably at an angle of 50 to 130° with respect to the tire circumferential direction. More preferably, the composite fiber is arranged at an angle of 80 to 100° with respect to the tire circumferential direction.

Still further, in the present invention, the conductive fiber preferably contains at least one of a metal-containing fiber, a carbon-containing fiber, and a metal oxide-containing fiber, and the non-conductive fiber also preferably contains at least one of cotton, nylon, polyester, and polypropylene. Still further, in the present invention, the breaking elongation Eb of the composite fiber is preferably 5% or more, and a resistance value of the composite fiber is preferably $1.0 \times 10^7$ $\Omega$/cm or less. Still further, in the present invention, the rubber chafer preferably contains 0.5 to 4 parts by mass of a carbon nanotube per 100 parts by mass of rubber components.

Still further, in the present invention, preferably, at least one of a ply coating rubber of the carcass ply, a belt coating rubber of the belt layer, a squeegee rubber between the carcass plies, the cushion rubber, the belt under cushion, and a bead filler rubber arranged at an outer side of a bead core in the tire radial direction embedded in each of the pair of bead portions uses a rubber composition in which 35 to 50 parts by mass of a carbon black having a nitrogen adsorption specific surface area ($N_2SA$) of 30 to 43 $m^2$/g and 5 parts by mass or less of an oil are blended per 100 parts by mass of rubber components containing 20 to 40 parts by mass of a styrene-butadiene rubber and 60 to 80 parts by mass of a natural rubber.

Still further, in the present invention, the rubber composition for tires preferably contains 0.1 to 6 parts by mass of at least one of a ketjen black and a carbon nanotube per 100 parts by mass of rubber components. The rubber composition for tires also preferably contains 2 to 15% by mass of at least one of the ketjen black and the carbon nanotube per a filling material.

Still further, in the present invention, when an amount of a styrene-butadiene rubber is A parts by mass and an amount of a natural rubber is B parts by mass in the rubber composition for tires, and

when a rubber composition in which, in contrast with the A parts by mass of the styrene-butadiene rubber, A*100/(A + B) (% by mass) of a carbon black having a nitrogen adsorption specific surface area ($N_2SA$) of 30 to 43 $m^2$/g is contained in the rubber composition for tires is defined as a rubber composition X;

a rubber composition in which, in contrast with the B parts by mass of the natural rubber, B*100/(A + B) (% by mass) of a carbon black having a nitrogen adsorption specific surface area ($N_2SA$) of 30 to 43 $m^2$/g is contained in the rubber composition for tires is defined as a rubber composition Y; and

the rubber composition for tires is defined as a rubber composition Z,

let moduli of the rubber compositions X, Y, and Z elongated by 50% be Mdx, Mdy, and Mdz (MPa), respectively, Mdx, Mdy, and Mdz satisfy formula (I) below:

$$0.9 \times \{ \mathrm{Mdx} * A/(A + B) + \mathrm{Mdy} * B/(A + B) \} \geq \mathrm{Mdz} \qquad (I).$$

EFFECTS OF THE INVENTION

According to the present invention, it becomes possible to realize a pneumatic tire in which an electric resistance can be reduced without adversely affecting other performances such as tire durability or manufacturing processes even when low loss of a rubber member of the tire is attempted.

BRIEF DESCRIPTION OF THE DRAWINGS

FIG. 1 is a half cross-sectional view in a width direction illustrating one example of a pneumatic tire of the present invention;

FIGS. 2A to 2G are explanatory diagrams illustrating specific examples of an arrangement configuration of a composite fiber on an unmolded carcass treatment;

FIG. 3 is a half cross-sectional view in the width direction illustrating another example of a pneumatic tire of the present invention;

FIG. 4 is a half cross-sectional view in the width direction illustrating still another example of a pneumatic tire of the present invention;

FIG. 5 is a diagram for illustrating a method of measuring a volume specific resistivity of a rubber;

FIG. 6 is a diagram for illustrating a method of measuring an electric resistance value of a tire;

FIG. 7 is a half cross-sectional view in the width direction illustrating still another example of a pneumatic tire of the present invention;

FIG. 8 is an explanatory diagram illustrating a variation of a positional relationship of ends of a cushion rubber and a belt under cushion in the tire width direction;

FIG. 9 is an explanatory diagram illustrating another variation of the positional relationship of the ends of the cushion rubber and the belt under cushion in the tire width direction; and

FIG. 10 is an explanatory diagram illustrating still another variation of the positional relationship of the ends of the cushion rubber and the belt under cushion in the tire width direction.

## MODE FOR CARRYING OUT THE INVENTION

Hereinafter, embodiments of the present invention will be described in detail with reference to the drawings.

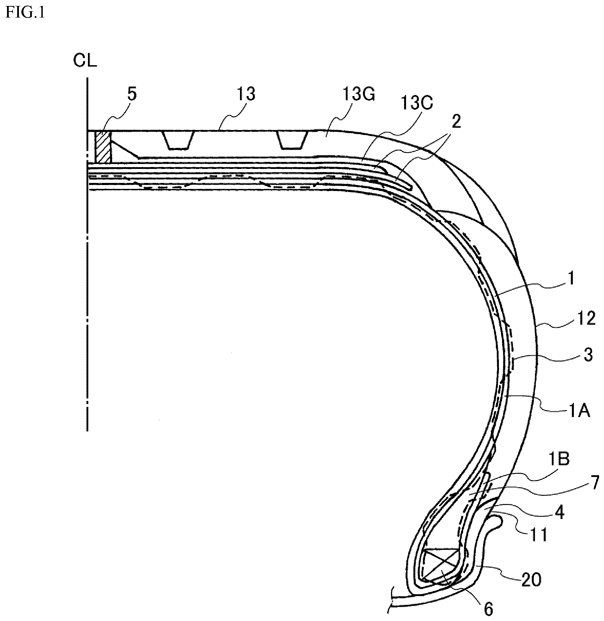

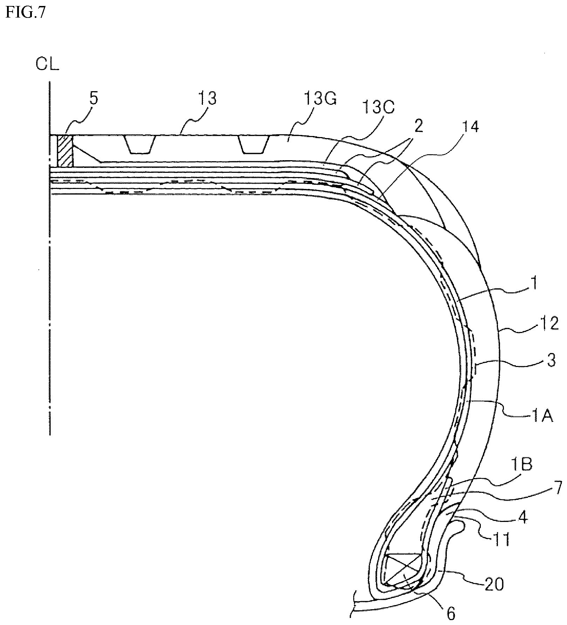

FIGS. 1 and 7 are a half cross-sectional view in a width direction illustrating one example of a pneumatic tire of the present invention. The pneumatic tire as illustrated includes a pair of bead portions 11, a pair of side wall portions 12 each continuing from the pair of bead portions 11 to an outer side in the tire radial direction, and a tread portion 13 extending between the pair of side wall portions 12 to form a grounding portion. Further, the tire as illustrated includes a carcass 1 as a skeleton composed of at least one, for example one to three, in the example as illustrated, one carcass ply extending toroidally between the pair of bead portions 11, and at least one, for example one to four, particularly two to four, in the example as illustrated, two belt layers 2 arranged at an outer side of a crown portion thereof in a tire radial direction. Further, a rubber chafer 4 is provided at an outer surface of the bead portion in a tire width direction. Still further, a cushion rubber 13C, and a tread rubber 13G forming the tread portion are sequentially arranged at an outer side of the belt layer 2 in the tire radial direction. FIGS. 1 and 7 illustrate the same embodiment except that, in FIG. 7, a belt under cushion 14 is arranged at outer ends of the belt layer 2 in the tire width direction.

In the present invention, it is important that a composite fiber 3 containing a conductive fiber and a non-conductive fiber extends at least from the bead portion 11 to a position in contact with the cushion rubber 13C or the belt under cushion 14 arranged at the outer ends of the belt layer 2 in the tire width direction. This composite fiber 3 is arranged in such a manner as to be exposed on at least one surface of the carcass 1 at either the outer and inner sides of the tire. The composite fiber 3 is thus arranged so that a conductive path inside the tire can be secured and an electric resistance of the tire can be reduced.

Further, in the present invention, it is important that the rubber chafer 4 contains a carbon black having a nitrogen adsorption specific surface area of 30 to 43 $m^2/g$. In other words, in the present invention, the rubber chafer 4 is compounded with a carbon black having a nitrogen adsorption specific surface area within the above range so that a conductive path from the inside the tire to a rim side through the rubber chafer 4 without adversely affecting an abrasion resistance property of the rubber chafer 4 even when low loss of the tire is attempted. Further, the rubber chafer 4 used for the present invention is favorable not only in abrasion resistance property but also in molding property. The nitrogen adsorption specific surface area of the above carbon black is required to be 30 to 43 $m^2/g$, preferably 33 to 40 $m^2/g$. If the nitrogen adsorption specific surface area is too small, a hysteresis loss becomes high, and if too large, an abrasion resistance property deteriorates so that in either case, expected effects of the present invention cannot be obtained. As such a carbon black, for example, fast extrusion furnace (FEF) and the like can be cited.

In the present invention, an amount of the above carbon black in the rubber chafer 4 is preferably 64 to 73 parts by mass, more preferably 66 to 70 parts by mass per 100 parts by mass of rubber components. The amount of the carbon black is configured to fall within the above range so that low loss of the tire and reduction in electric resistance can be favorably compatible.

In the present invention, it is preferable that the rubber chafer 4 contains, in addition to the above carbon black, a carbon nanotube (CNT) so that an abrasion resistance property and reduction in electric resistance can be more favorably compatible. Preferably, the rubber chafer 4 contains 0.5 to 4 parts by mass, particularly 1 to 3 parts by mass of the carbon nanotube per 100 parts by mass of rubber components. The carbon nanotube exhibits a smaller interaction with a rubber than the carbon black and has characteristics that an elastic modulus decreases in a high strain region of a stress strain curve and a break elongation Eb increases. If the Eb of the rubber is high during crack propagation, energy at a crack tip is reduced so that an abrasion resistance property and a rim deviation resistance property are improved, which is preferable. Herein, the carbon nanotube is a conductive material having a rod-like or thread-shaped structure in which a graphene sheet is rolled, and as a commercially available product, for example, C100 manufactured by Arkema, Inc., NC7000 manufactured by Nanocyl SA., and the like can be cited. Further, a vapor-phase growth carbon fiber can be also used.

Further, in the present invention, it is also preferable that the rubber chafer 4 contains a reclaimed rubber. Preferably, 3 to 10 parts by mass, particularly 5 to 10 parts by mass of the reclaimed rubber per 100 parts by mass of rubber components of the rubber chafer 4 are contained. Herein, the reclaimed rubber refers to a rubber obtained by desulfurizing a vulcanized rubber of a waste tire and the like to reuse the same. The reclaimed rubber is contained in the rubber chafer 4 so that a recycle material ratio can be increased and an effect of being capable of providing an eco-friendly product can be accordingly obtained, which is preferable.

In the present invention, the composite fiber 3 is preferably arranged in such a manner as to be exposed on both surfaces of the carcass 1 at the outer and inner sides of the tire. Thereby, a portion of exposure on the tire outer side surface of the carcass 1 can secure a connection with a tire grounding portion, while a portion of exposure on the tire inner side surface of the carcass 1 can secure a connection with a rim 20 through the rubber chafer 4 at a turn-up portion 1B, and as a result, a conductive path inside the tire can be secured.

Further, in the present invention, since the composite fiber 3 contains a conductive fiber and a non-conductive fiber, a certain degree of elongation can be secured different from a conventional metal fiber or a carbon fiber, and thus the composite fiber fails to break when a stress is loaded during a tire manufacturing process or when a strain is applied during travel of a vehicle. Further, in the present invention, since the composite fiber 3 is not that which is arranged in place of a skeleton member such as a carcass ply, a problem such as deterioration in tire durability fails to occur. Thus, according to the present invention, since an electric resistance can be reduced without adversely affecting other performances or manufacturing processes, the pneumatic tire without problems due to increase in electric resistance can be realized even when reduction in fuel consumption is attempted by low loss of a tire rubber member.

The composite fiber 3 used for the present invention may contain a conductive fiber and a non-conductive fiber. Specifically, for example, as the conductive fiber, a metal-containing fiber, a carbon-containing fiber, and a metal oxide-containing fiber can be cited, and any one or more thereof can be used. Herein, in the present invention, the metal-containing fiber refers to a fiber whose content of metal is 5 to 100% by mass, and as the metal and the metal oxide, for example, stainless steel, steel, aluminum, copper, and oxides thereof can be cited. Further, as the non-conductive fiber, an organic material, such as cotton, nylon, polyester such as polyethylene terephthalate, and polypropylene can be cited, and any one or more thereof can be used. The composite fiber composed of such conductive fiber and non-conductive fiber has a favorable elongation and is excellent in adhesion, which is preferable.

A ratio of the conductive fiber to the non-conductive in the composite fiber 3 used for the present invention is not particularly limited, but preferably, 50% or more by mass, for example, 80 to 98% by mass of the non-conductive fiber is contained. When the non-conductive fiber is contained at the above ratio, elongation of the composite fiber 3 can be favorably secured, which is preferable.

As the composite fiber 3 in the present invention, specifically, for example, Bekinox (registered trademark) manufactured by Bekaert Japan Corporation and Clacarbo (registered trademark) KC-500R and KC-793R manufactured by Kuraray Trading Co., Ltd., and the like can be used.

Further, from the viewpoint of attaining an air bleeding property, a conductivity, and a durability at the same time, a fineness of the composite fiber 3 is preferably 20 to 1,000 dtex, more preferably 150 to 600 dtex.

The break elongation Eb of the composite fiber 3 is preferably 5% or more since breakage during manufacture can be suppressed, more preferably 6% or more since breakage is unlikely to occur also during an abnormal input during use of the tire. The break elongation Eb can be, for example, 5 to 15%. Herein, the break elongation Eb of the composite fiber 3 can be measured at 23°C in accordance with a method of measuring "elongation at break" defined in JIS K 6251:2010.

Further, a resistance value of the composite fiber 3 is preferably $1.0 \times 10^7$ Ω/cm or less, more preferably $1.0 \times 10^3$ Ω/cm or less, further preferably 10 to $1.0 \times 10^3$ Ω/cm. From the viewpoint of reliably securing a conductive path, the resistance value of the composite fiber 3 preferably falls within the range.

In the present invention, the composite fiber 3 is required to extend at least from the bead portion 11 to a position in contact with the cushion rubber 13C or belt under cushion 14, and preferably, as illustrated, extends from the bead portion 11 to the tread portion 13. Since for the cushion rubber 13C and belt under cushion 14, a conductive rubber is usually used, a conductive path can be secured by arranging the composite fiber 3 at least from the bead portion 11 to a position in contact with the cushion rubber 13C or belt under cushion 14, but since a conductive path from the cushion rubber 13C to the tread grounding portion is secured by a conductive rubber portion 5 which is usually arranged in the vicinity of a tire equator line CL, from the viewpoint of shortening the conductive path, the composite fiber 3 preferably extends from the bead portion 11 to the tread portion 13. Herein, in the present invention, the cushion rubber 13C is a rubber member arranged between a tread rubber 13G and a coating rubber of the belt layer 2 (when a cap layer is provided, a coating rubber of the cap layer) at least on the tire equator line CL, and is a rubber member which usually extends to the vicinity of a tire shoulder portion and is covered by the tread rubber 13G and, depending on an arrangement state, a sidewall rubber as well so as to be not exposed on a tire outer surface. Further, the belt under cushion 14 is a conductive rubber member arranged at the outer ends of the belt layer 2 in the tire width direction, and, as illustrated in FIG. 7, is in contact with the cushion rubber 13C and positioned at an inner side thereof in the tire radial direction. More specifically, the belt under cushion 14 is a conductive rubber member arranged, in the vicinity of an outer end portion in the tire width direction of a belt member including a plurality of layers of the belt layers and a covering rubber of a belt cord, at an inner side in the tire radial direction of at least one belt layer, particularly all the belt layers and at an outer side of the carcass 1 in the tire radial direction. The belt under cushion 14 is provided so that a cushion property at a portion provided with the same can be improved.

In the present invention, arrangement positions of end portions of the cushion rubber 13C and the belt under cushion 14 in the tire width direction can be suitably determined in relation to other members. For example, in FIG. 7, the belt under cushion 14 is arranged at the inner side of the belt layers 2 in the tire radial direction, and the cushion rubber 13C is arranged at the outer side of the belt layers 2 in the tire radial direction in such a manner as to cover the outer end portions of the belt layers 2 in the tire width direction.

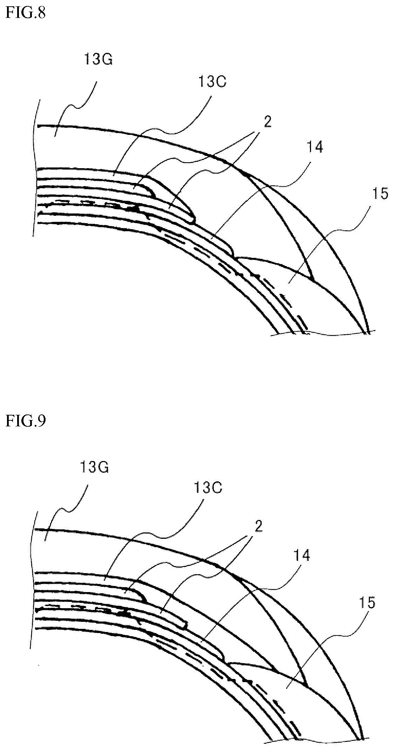

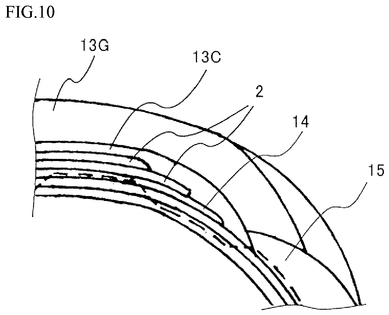

FIGS. 8 to 10 are explanatory diagrams illustrating variations of a positional relationship of the end portions of the cushion rubber 13C and the belt under cushion 14 in the tire width direction. Reference numeral 15 in the drawings refers to a side rubber. In FIG. 8, the belt under cushion 14 is arranged at the inner side of the belt layer 2, positioned at the innermost side in the tire radial direction, in the tire radial direction, and extends in the tire width direction to the outside of the outer ends of the belt layer 2 in the tire width direction and the cushion rubber 13 C is arranged outside the belt layer 2 in the tire radial direction. Further, in FIG. 9, similarly to FIG. 8 in that the belt under cushion 14 is arranged at the inner side of the belt layer 2, positioned at the innermost side in the tire radial direction, in the tire radial direction, and extends in the tire width direction to the outside of the outer ends of the belt layer 2 in the tire width direction, but the cushion rubber 13 C is arranged outside the belt layer 2 and the belt under cushion 14 in the tire radial direction to a position in contact with the side rubber 15. Further, in FIG. 10, similarly to FIGS. 8 and 9 in that the belt under cushion 14 is arranged at the inner side of the belt layer 2, positioned on the innermost side in the tire radial direction, in the tire radial direction, and extends in the tire width direction to the outside of the outer ends of the belt layer 2 in the tire width direction, but the cushion rubber 13C is arranged outside the belt layer 2 and the belt under cushion 14 in the tire radial direction and the end portion of the cushion rubber 13C in the tire width direction is arranged in such a manner as to sneak into an inner side of the side rubber 15 in the tire width direction.

In embodiments as illustrated in FIGS. 7 to 9, the composite fiber 3 is arranged from the bead portion 11 to a position in contact with the belt under cushion 14 so that a connection can be secured with the shortest arrangement length. On the other hand, in an embodiment as illustrated in FIG. 10, the cushion rubber 13C extends more outside in the tire width direction than the belt under cushion 14, and the end portion of the cushion rubber 13C in the tire width direction is arranged in such a manner as to sneak into the inner side of the side rubber 15 in the tire width direction, and accordingly, the composite fiber 3 is arranged from the bead portion 11 to a position in contact with the cushion rubber 13C under the side rubber 15 so that a connection can be secured with the shortest arrangement length.

Herein, as illustrated in FIG. 7, the conductive rubber portion 5 is disposed from the tread grounding portion to an outer surface of the cushion rubber 13C in the tire radial direction and can be provided over the entirety in a tire circumferential direction. In other words, the conductive rubber portion 5 is provided in such a manner as to penetrate the tread rubber 13G from the tread grounding portion.

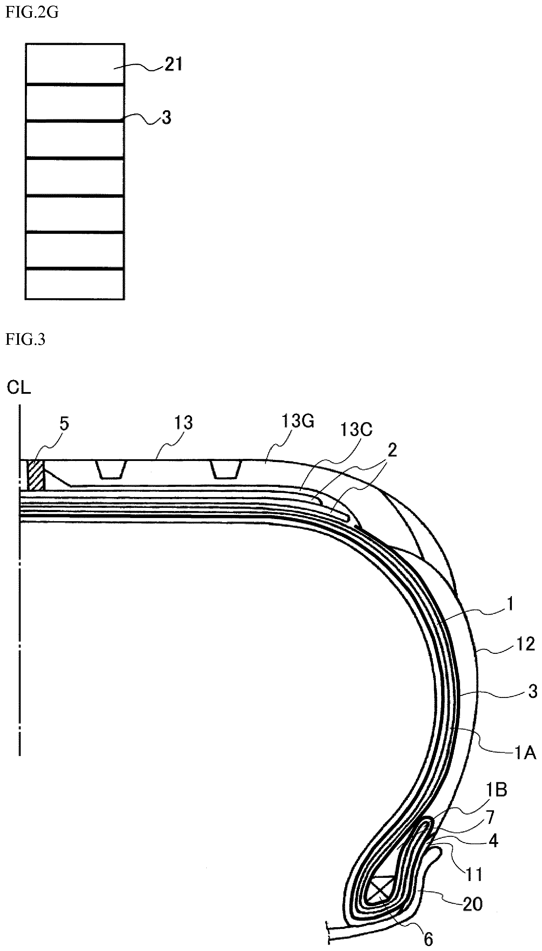

Further, in the present invention, the composite fiber 3 is required to be arranged in such a manner as to be exposed on at least one surface of the carcass 1 at either the outer and inner sides of the tire, and preferably exposed on both surfaces of the carcass 1 at the outer and inner sides of the tire. FIGS. 2A to 2G are diagrams illustrating specific examples of an arrangement state of the composite fiber 3 on an unmolded carcass treatment 21. In FIGS. 2A to 2E and 2G, a longitudinal direction (up-down direction in the drawings) of the carcass treatment 21 corresponds to the tire circumferential direction. Specifically, for example, as illustrated in FIGS. 1 and 2A, the composite fiber 3 can be sewn to the carcass 1 in the form of so-called running stitch. The sewing form is not particularly limited as long as the composite fiber is exposed on at least one of both of the surfaces of the carcass 1. In this case, the composite fiber 3 is arranged along an extending direction thereof on both of the surfaces at the outer and inner sides of the carcass 1 while penetrating the carcass 1. Thereby, the composite fiber 3 is reliably exposed on a rubber chafer 4 side of the turn-up portion 1B of the carcass regardless of the size of a tire or a member so that a conductive path can be reliably secured.

In this case, a sewing pitch of the composite fiber 3 can be usually 2 to 40 mm, particularly 5 to 25 mm along the extending direction of the composite fiber 3. From the viewpoint of more reliably securing a conductive path, such a rage is preferable.

Further, as illustrated in FIG. 2B, the composite fiber 3 can be also wound around the carcass 1. In other words, in this case, the composite fiber 3 is wound around the unmolded carcass treatment 21 at least by one round along the width direction thereof, i.e., in the same direction as that of a carcass ply cord, to be arranged on an outer circumference thereof. Also thereby, the composite fiber 3 is reliably exposed on the rubber chafer 4 side of the turn-up portion 1B of the carcass regardless of the size of a tire or a member so that a conductive path can be reliably secured.

Further, as illustrated in FIG. 2C, the composite fiber 3 can be also spirally wound around the carcass 1. In this case, the composite fiber 3 is wound around the unmolded carcass treatment 21 in a manner inclined with respect to the width direction thereof, i.e., in a direction inclined with respect to the carcass ply cord, to be arranged on the outer circumference thereof, and can be spirally wound continuously so as to have an advantage that the manufacturing efficiency is better than the embodiment of FIG. 2B. Also thereby, the composite fiber 3 is reliably exposed on the rubber chafer 4 side of the turn-up portion 1B of the carcass regardless of the size of a tire or a member so that a conductive path can be reliably secured.

Note that as illustrated in FIG. 2D, the composite fiber 3 may be also wound on both end portions of the carcass treatment 21 as unmolded in the width direction along the width direction thereof, i.e., in the same direction as that of the carcass ply cord, in such a manner as to be positioned in a range from the bead portion 11 to a position in contact with the cushion rubber 13C or the belt under cushion 14, to be arranged on the outer circumference thereof. In other words, in this case, the composite fiber 3 is not arranged in the vicinity of the tire equator line CL. Also thereby, the composite fiber 3 is reliably exposed on the rubber chafer 4 side of the turn-up portion 1B of the carcass 1 regardless of the size of a tire or a member so that a conductive path can be reliably secured.

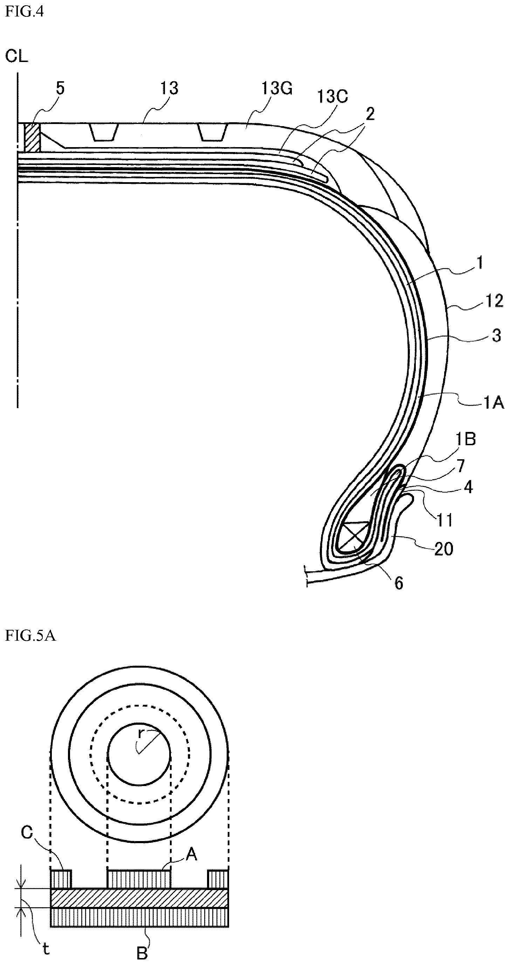

Still further, as a modified example of FIG. 2B, as illustrated in FIG. 2E, the composite fiber 3 may be also wound around the carcass. FIGS. 3 and 4 are half cross-sectional views in the width direction of other examples of the pneumatic tire of the present invention corresponding to FIG. 2E. In this case, the composite fiber 3 is partially wound on the unmolded carcass treatment 21 along the width direction thereof, i.e., in the same direction as that of the carcass ply cord. In an example as illustrated in FIG. 3, the composite fiber 3 is wound around the carcass 1 from a position in contact with one end portion of the cushion rubber 13C or the belt under cushion in the tire width direction via the bead portion 11 through a tire inner side of the carcass 1 to the other end of the cushion rubber 13C or the belt under cushion in the tire width direction. In an example as illustrated in FIG. 4, when the carcass 1 is composed of a main body portion 1A extending between the pair of bead portions 11 and the turn-up portions 1B turned up and curled up from the inside to the outside of the tire around a bead core 6 embedded in each of the pair of bead portions 11, the composite fiber 3 is wound around the carcass 1 from a position outside of one of the turn-up portions 1B in the tire width direction and in contact with the rubber chafer 4 via an inner side of the turn-up portion 1B in the tire width direction and an outer side of the main body portion 1A in the tire width direction through a tire outer side of the carcass 1, further, via the other outer side of the main body portion 1A in the tire width direction and an inner side of the other turn-up portion 1B in the tire width direction to a position outside of the other of the turn-up portions 1B in the tire width direction and in contact with the other rubber chafer 4. Also thereby, the composite fiber 3 is reliably exposed on the rubber chafer 4 side of the turn-up portion 1B of the carcass 1 regardless of the size of a tire or a member so that a conductive path can be reliably secured.

Still further, as a modified example of FIG. 2A, as illustrated in FIG. 2F, the composite fiber 3 may be also sewn to the carcass 1 using a sewing machine in such a manner as to be woven by a needle thread 3a and a bobbin thread 3b. Also in this case, the composite fiber 3 penetrates the carcass 1 along the extending direction thereof to be arranged on both surfaces at the outer and inner sides of the carcass 1. Thereby, the composite fiber 3 is reliably exposed on the rubber chafer 4 side of the turn-up portion 1B of the carcass regardless of the size of a tire or a member so that a conductive path can be reliably secured. Still further, as illustrated in FIG. 2G, the composite fiber 3 may be also arranged on a half surface of the carcass treatment 21 to be parallel to each other in the tire width direction.

In the present invention, from the viewpoint of manufacturability, arrangement configurations as illustrated in FIGS. 2A, 2C, and 2E are preferable among the above. Particularly, FIGS. 2A and 2E are more preferable.

In this case, a winding pitch of the composite fiber 3 can be usually 1 to 12 times/m, particularly 2 to 5 times/m along the longitudinal direction of the carcass treatment 21, i.e., a direction orthogonal to an extending direction of the carcass ply cord. From the viewpoint of more reliably securing a conductive path, such a range is preferable.

In the present invention, the composite fiber 3 may be arranged in such a manner as to be exposed on at least one surface of the carcass 1 at either the outer and inner sides of the tire, and in a case that exposed on both of the surfaces, it is preferable that a portion at which the composite fiber 3 is exposed on the tire outer side and a portion at which the composite fiber 3 is exposed on the tire inner side are connected with each other at least one location. Thereby, a conductive path can be secured. Herein, "connected" means that a portion at which the composite fiber 3 is exposed on the tire outer side and a portion at which the composite fiber 3 is exposed on the tire inner side may be electrically connected with each other, while not necessarily physically connected with each other.

Further, although depending on a resistance value of the composite fiber 3, from the viewpoint of reliably securing a conductive path in the tire circumferential direction, the composite fiber 3 is preferably arranged at an end count of 0.04 times/5 cm or more, more preferably at an end count of 0.1 times/5 cm or more, and for example may be at an end count of 0.1 to 0.2 times/5 cm.

Still further, as an arrangement angle of the composite fiber 3, the composite fiber 3 is preferably arranged at an angle of 30 to 150°, more preferably at an angle of 50 to 130°, further preferably at an angle of 80 to 100° with respect to the tire circumferential direction. When the extending direction of the composite fiber 3 is too close to the tire circumferential direction, the length of a conductive path becomes large, which is not preferable. Note that the composite fiber 3 is not necessarily arranged linearly as illustrated in FIGS. 2A to 2G and may be arranged, for example, in a zigzag shape or in a wave shape, but also in this case, a direction in which the composite fiber 3 as a whole extends is defined as the extending direction of the composite fiber 3.

In the present invention, the composite fiber 3 can be arranged in place of a bleeder cord which has been conventionally provided for bleeding air in the carcass ply during vulcanization. A bleeder cord is a cord member which is arranged on one side or both sides of a carcass or a belt layer for the purpose of reducing air inclusion failures occurring during a tire manufacturing process, and is generally composed of a cotton yarn, a polyester yarn, or the like. A bleeder cord can reduce air inclusion failures by absorbing and permeating air contained in a tire during a tire manufacturing process. Because a bleeder cord usually extends at least from the bead portion 11 to a position in contact with the cushion rubber 13C or the belt under cushion 14, a part of or a whole of the bleeder cord is replaced with the composite fiber 3, whereby an effect due to the arrangement of the composite fiber 3 can be obtained without adding a new member. As a matter of course, an expected effect of the present invention can be obtained by adding the composite fiber 3 while the bleeder cord is maintained.

When the composite fiber 3 is arranged in place of a conventional bleeder cord, the composite fiber 3 can be arranged in place of 3 to 100% by mass, preferably 20 to 50% by mass of the bleeder cord. When such an extent of a number of bleeder cords are replaced with the composite fiber 3, an expected effect of the present invention can be reliably obtained.

The composite fiber 3 used for the present invention may be either a pun yarn or a filament yarn, but is preferably a spun yarn (blended yarn) obtained by spinning a short fiber. To secure an adhesive property of the composite fiber 3 with a rubber, the composite fiber 3 is required to be subjected to dipping treatment using an adhesive agent for securing adhesion between an organic fiber and a rubber, but when an adhesive surface coating is provided on the composite fiber 3 by dipping treatment, an air bleeding property through the composite fiber 3 deteriorates. Thus, when the composite fiber 3 is arranged in place of a bleeder cord, it is preferable that dipping treatment is only partially performed, and it is more preferable that dipping treatment is not performed. However, when no adhesive surface coating is made, an adhesive force between the composite fiber 3 and an unvulcanized rubber decreases and a drop may occur during manufacture. In this case, by using a spun yarn (blended yarn), adhesion with a rubber can be secured due to an anchoring effect of a short fiber even without dipping treatment, and an air bleeding property is also maintained, which is preferable. Note that when a filament yarn is used, the filament yarn is preferably twisted in order to maintain an air bleeding property, and in this case, a twist count is preferably 10 times/10 cm or more, and may be, for example, 30 to 60 times/10 cm.

On the other hand, because when a part of the bleeder cord is replaced with the composite fiber 3, an air bleeding property can be secured by remaining bleeder cords composed, for example, of a cotton yarn, adhesion with a rubber and an air bleeding property can be compatible even when the composite fiber 3 is subjected to dipping treatment. Thus, in the present invention, the composite fiber 3 may be subjected to dipping treatment, but is preferably not subjected to dipping treatment from the viewpoint of securing the degree of freedom of the design, such as replacement of all the bleeder cords with the composite fiber 3.

In the present invention, it is important only that the above composite fiber 3 is arranged, and expected effects of the present invention can be thereby obtained, while other portions of a tire structure can be suitably configured in accordance with an ordinary method, and are not to be particularly limited.

For example, in the present invention, since an electric resistance of the tire can be reduced due to the arrangement of the composite fiber 3, as a rubber composition, a rubber composition used for a tire case member, such as a coating rubber for the carcass ply in which low loss is achieved as compared to a conventional tire structure can be used, thereby being capable of improving a low fuel consumption property of the tire.

Further, in the tire as illustrated, the carcass 1 is turned up around the bead core 6 and curled up to an outer side in the tire radial direction to form the turn-up portion 1B, and at the outer side of the bead core 6 in the tire radial direction, a bead filler 7 having a tapered cross-section is arranged. Moreover, although unillustrated, the tire of the present invention can be also provided, as necessary, with at least one cap layer covering the entirety of the belt layer 2 or at least one layered layer covering only the end portion of the belt layer 2 at the outer side of the belt layer 2 in the tire radial direction. Still further, although unillustrated, an inner liner is usually provided at the innermost surface of the tire.

Note that in the present invention, a coating rubber of the carcass ply preferably contains a carbon black having a nitrogen adsorption specific surface area of 30 to 43 $m^2$/g, particularly 33 to 40 $m^2$/g. Thereby, a conductive path can be more reliably secured. As such a carbon black, for example, fast extruding furnace (FEF), general purpose furnace (GPF), and the like can be cited.

Further, in the present invention, particularly, at least one of a ply coating rubber of the carcass ply, a belt coating rubber of the belt layer, a squeegee rubber between the carcass plies, the cushion rubber, the belt under cushion, and a bead filler rubber preferably uses a rubber composition for tires which will be described below in detail. Thereby, there can be realized a pneumatic tire which inhibits increase of an electric resistance and has a low rolling resistance and an excellent durability without impairing reinforcement and durability performance.

(Rubber Composition for Tires)

In the above rubber composition for tires of the present invention, 35 to 50 parts by mass of a carbon black having a nitrogen adsorption specific surface area ($N_2SA$) of 30 to 43 $m^2/g$ and 5 parts by mass or less of an oil are blended per 100 parts by mass of rubber components containing 20 to 40 parts by mass of a styrene-butadiene rubber and 60 to 80 parts by mass of a natural rubber.

As the rubber component used for the present invention, at least a styrene-butadiene rubber (SBR) and a natural rubber (NR) can be cited.

An amount of the styrene-butadiene rubber is preferably 20 to 40 parts by mass per 100 parts by mass of rubber components. An amount of the styrene-butadiene rubber is configured to be 20 parts by mass or more, thereby improving a crack growth resistance of low strain so that a processability of an unvulcanized rubber can be improved, while an amount of the styrene-butadiene rubber is configured to be 40 parts by mass or less, whereby low loss can be improved.

As the styrene-butadiene rubber which can be used, a solution-polymerized styrene butadiene rubber, an emulsion-polymerized styrene butadiene rubber, a modified styrene butadiene rubber, and the like can be cited.

Further, an amount of the natural rubber is preferably 60 to 80 parts by mass per 100 parts by mass of rubber components. An amount of the natural rubber is configured to be 60 parts by mass or more, whereby a crack growth resistance of high strain can be improved, while an amount of the natural rubber is configured to be 80 parts by mass or less, whereby a processability of an unvulcanized rubber can be improved and an effect of reduction in cost can be obtained.

As the natural rubber, those which are used in the tire industry, such as RSS#3, TSR20, and SIR20, can be cited.

Besides the natural rubber (NR) and the styrene-butadiene rubber (SBR), as necessary, at least one of a butadiene rubber (BR), an isoprene rubber (IR), a butyl rubber (IIR), a halogenated butyl rubber, a chloroprene rubber (CR), an acrylonitrile-butadiene rubber (NBR), an ethylene-propylene-diene ternary copolymer (EPDM) can be used.

As the carbon black used for the present invention, a carbon black having a nitrogen adsorption specific surface area (measured in accordance with $N_2SA$, JIS K 6217-2:2001) of 30 to 43 $m^2/g$ is used. The nitrogen adsorption specific surface area ($N_2SA$) of this carbon black is limited to the above range because a carbon black having a large particle diameter is used in order to improve a dispersibility of the carbon black. Preferably, the above nitrogen adsorption specific surface area ($N_2SA$) is desirably configured to be 33 to 40 $m^2/g$.

As the carbon black having such physical properties, FEF, GPF, semireinforcing furnace (SRF), and the like can be used.

An amount of the above carbon black is preferably 35 to 50 parts by mass per 100 parts by mass of the rubber components.

An amount of the carbon black is configured to be 35 parts by mass or more, whereby a mechanical strength of the rubber can be secured, while an amount of the natural rubber is configured to be 50 parts by mass or less, whereby a rubber exhibiting low loss performance can be obtained.

As the oil used for the present invention, for example, at least one selected from a paraffin-based oil, a naphthene-based oil, an aromatic base oil, and an aromatic base oil can be cited, and commercially available products can be used therefor.

For example, as the paraffin-based oil, commercially available products, such as product name, "Super Oil Y22", manufactured by JX Nippon Oil & Energy Corporation, can be used. Further, the naphthene-based oil may be hydrogenated or unhydrogenated. As the naphthene-based oil, commercially available products, such as "straight asphalt-containing naphthene-based oil" manufactured by Sankyo Yuka Kogyo Co., Ltd., product name "A/O MIX", can be used.

An amount of the above oil is 5 parts by mass or less (including 0 parts by mass) per 100 parts by mass of the rubber components.

An amount of the oil is configured to be 5 parts by mass or less, whereby a mechanical strength of the rubber can be improved. Further, also when the above oil is not contained (0 parts by mass), a compounding agent, such as the carbon black, is sufficiently dispersed and a necessary rubber physical property can be obtained. Particularly, an amount of the oil is preferably configured to be 0 to 3 parts by mass.

The above rubber composition for tires of the present invention preferably further contains at least one of a ketjen black and a carbon nanotube (CNT) in view of further decreasing an electric resistance by further providing a conductivity and further improving durability performance.

As the carbon nanotube (CNT) which can be used, a carbon nanotube having a rod-like or thread-shaped structure in which a graphene sheet is rolled, a vapor-phase growth carbon fiber (VGCF), and the like can be cited, and C100 (manufactured by Arkema, Inc.) or NC7000 (manufactured by Nanocyl SA.) which are commercially available products thereof, and the like can be used. Such carbon nanotubes (CNT) further provides a conductivity, and different from the above carbon black, exhibits a small interaction with a rubber, an elastic modulus decreases in a high strain region of a high strain curve in a stress strain curve, a break elongation (Eb) increases, and if the Eb of the rubber is high during crack propagation, energy at a crack tip is reduced so that a crack growth resistance is improved.

As the ketjen black, a variety of grades of ketjen blacks having hollow particles of a shell shape and a high conductivity can be used. As the ketjen black which can be used, for example, at least one of Ketjen black EC300J (granular), Ketjen black EC600JD (granular), Carbon ECP (powder product of Ketjen black EC300J), Carbon ECP600JD (powder product of Ketjen black EC600JD), Lionite, all of the above are manufactured by Lion Corporation, and the like can be cited.

A total amount of such ketjen black and carbon nanotube is preferably 0.1 to 6 parts by mass, more preferably 1 to 5 parts by mass per 100 parts by mass of rubber components.

A total amount of such ketjen black and carbon nanotube is configured to be 0.1 parts by mass or more, whereby a conductivity can be provided to a rubber compound, while such an amount is configured to be 6 parts by mass or less, whereby the low loss performance of the rubber can be prevented from lowering.

In the present invention, the carbon black, the ketjen black having a nitrogen adsorption specific surface area ($N_2SA$) satisfying the above range, and the carbon nanotube are used as a filling material, but in view of providing a more favorable conductivity and improving durability performance by further improving a crack growth resistance, preferably 2 to 15% by mass, more preferably 2.5 to 12.5% by mass of at least one of the ketjen black and the carbon nanotube per the filling material is compounded.

Note that as long as effects of the present invention are not impaired, as the filling material other than the carbon black, the ketjen black, and the carbon nanotube as described above, silica, clay, talc, calcium carbonate, and the like can be used.

To the above rubber composition for tires, besides the components as described above, as long as effects of the present invention are not impaired, in accordance with purposes or as necessary, other components can be suitably selected to be added. As the other components, for example, in addition to additives, such as a vulcanizing agent, such as sulfur, a vulcanization accelerator of thiazole base, sulfonamide base, or the like, a vulcanization aid, zinc oxide (zinc flower), stearic acid, an anti-aging agent, an antioxidant, an antiozonant, a colorant, a lubricant, a silane coupling agent, and a foaming agent, a foaming assistant, a variety of known compound agents usually used in the tire industry, and the like can be cited. Commercially available products can be used therefor.

The above rubber composition for tires can be prepared by compounding the carbon black and the oil having the above characteristics and the like with the rubber components, and further kneading, besides the ketjen black and the carbon nanotube, zinc oxide, stearic acid, an anti-aging agent, sulfur, a vulcanization accelerator, or an additive suitably selected in accordance with the purpose or need.

Conditions of the above kneading are not particularly limited, and an input volume to a kneading device, a rotation speed of a rotor, a ram-air pressure, and the like, and conditions of a kneading temperature, a kneading time, a type of the kneading device, and the like may be suitably selected in accordance with the purpose. As such a kneading device, a Banbury mixer, an intermix, a kneader, a roll, and the like which are used for kneading a rubber composition can be cited.

Further, when an amount of a styrene-butadiene rubber is A parts by mass and an amount of a natural rubber is B parts by mass in the rubber composition for tires, and when a rubber composition in which, in contrast with the A parts by mass of the styrene-butadiene rubber, A*100/(A + B) (% by mass) of a carbon black having a nitrogen adsorption specific surface area ($N_2SA$) of 30 to 43 m$^2$/g is contained in the rubber composition for tires is defined as a rubber composition X; a rubber composition in which, in contrast with the B parts by mass of the natural rubber, B*100/(A + B) (% by mass) of a carbon black having a nitrogen adsorption specific surface area ($N_2SA$) of 30 to 43 m$^2$/g is contained in the rubber composition for tires is defined as a rubber composition Y; and the rubber composition for tires is defined as a rubber composition Z, let moduli of the rubber compositions X, Y, and Z elongated by 50% be Mdx, Mdy, and Mdz (MPa), respectively, Mdx, Mdy, and Mdz preferably satisfy formula (I) below:

$$0.9 \times \{ \mathrm{Mdx} *A/(A + B) + \mathrm{Mdy}*B/(A + B) \} \geq \mathrm{Mdz} \qquad (I).$$

The rubber composition for tires which satisfies the above formula (I) further inhibits increase of an electric resistance, further reduces a rolling resistance and has a further excellent durability without impairing reinforcement and durability performance.

As described above, the above rubber composition for tires is applied to at least one of the ply coating rubber of the carcass ply, the belt coating rubber of the belt layer, the squeegee rubber between the carcass plies, the cushion rubber, the belt under cushion, and the bead filler rubber. In view of a large amount of rubber used and a large influence on a loss property with respect to the entirety of the tire and in view of a position at the center of a conductive path from the rim to the tread, it is preferable that the rubber composition for tires is applied to the ply coating rubber. Thereby, a pneumatic tire in which low loss, a crack resistance, reinforcement, conductivity are compatible can be obtained.

According to the rubber composition for tires thus configured, an amount of a natural rubber (NR) falls within a specific range, whereby durability performance in a high strain region is improved, an amount of a styrene-butadiene rubber (SBR) falls within a specific range, whereby durability performance of low strain is improved without deteriorating low loss property, and for the purpose of low loss of the rubber, a carbon black having a nitrogen adsorption specific surface area ($N_2SA$) restricted within the above range is used, and further, an amount of an oil is a predetermined amount or less to improve reinforcement, thereby being capable of contributing to realization of the tire which inhibits increase of an electric resistance and has a low rolling resistance and an excellent durability, while having reinforcement and durability performance equal to those of conventional products.

Further, 0.1 to 6 parts by mass of at least one of a ketjen black and a carbon nanotube is contained so as to provide the rubber composition for tires in which a conductivity is more favorable without poor dispersibility or deterioration of low loss. In general, it is known that a conductive material or the like has a poor dispersibility, deteriorates low loss property, and weakly interacts with a rubber, but in the present invention, as a result of study on kinds and amount of conductive materials, a specific amount of at least one of a ketjen black and a carbon nanotube is compounded, whereby a conductivity can be further provided without poor dispersibility or deterioration of low loss property, and lowness of reinforcement of the above conductive materials is utilized, thereby providing the rubber composition for tires having further excellent durability performance.

Further, the rubber composition for tires in which 2 to 15% by mass of at least one of the ketjen black and the carbon nanotube per a filling material are compounded has an advantage of providing further conductivity and exhibiting further favorable durability performance while maintaining low loss property and reinforcement.

Herein, in the present invention, preferably, when a carcass ply manufactured using the above rubber composition for tires as a ply coating rubber is used, it is preferably configured to make an arrangement in such a manner that an extruding direction and the tire width direction correspond to each other. For example, when the above rubber composition for tires containing a carbon nanotube (CNT) is compounded, anisotropy in strength is obtained with elongation in a constant direction so that tire members, in which the carbon nanotube or the like is oriented by being extruded in a constant direction, are arranged in consideration of a stress direction, whereby a pneumatic tire having further excellent durability performance can be obtained.

Note that a method of manufacturing a pneumatic tire in which the above rubber composition for tires is applied to the above case members for tires is not particularly limited and the pneumatic tire can be manufactured in accordance with conventionally known manufacturing methods. In other words, the above rubber composition for tires is kneaded to be extruded to have a predetermined cross-sectional shape, or a fiber cord or the like is covered to have a predetermined thickness, processed into a desirable rubber member for tire molding, adhered to a predetermined part of a green tire, and then vulcanized and molded in a predetermined mold, at a predetermined temperature, and under a predetermined pressure, whereby the pneumatic tire can be manufactured.

EXAMPLES

The present invention will be described in more detail using Examples.

A pneumatic tire having a tire size of 195/65R15 including a carcass as a skeletal structure composed of one carcass ply extending toroidally between a pair of bead portions and two belt layers provided on an outer side of the carcass in a tire radial direction of a crown portion, in which a rubber chafer is provided at an outer surface of the bead portion in a tire width direction, was manufactured.

This tire was provided with a bleeder cord composed of Bekinox(registered trademark) manufactured by Bekaert Corporation, from a bead portion to a tread portion in such a manner as to be exposed on both surfaces of the carcass at the outer and inner sides of the tire. The bleeder cord was provided in such a manner as to be sewn to the carcass at an angle of 90° with respect to a tire circumferential direction and at a sewing pitch of 20 mm. Further, to the rubber chafer, a compounded rubber as indicated in Table 1 below was applied.

For each of the obtained test tire, an electric resistance value was evaluated. The results thereof are listed in the below table.

(Measurement of Loss Tangent $\delta$ and Dynamic Storage Elastic Modulus E')

Using a spectrometer (dynamic viscoelasticity measuring test device) manufactured by Uejima Seisakusho Co., Ltd., to a rubber test piece having a thickness of 2 mm, a width of 5 mm, and a length of 20 mm, an initial load of 160 g was applied, and a loss tangent $\delta$ and a dynamic storage elastic modulus E' were measured at a frequency of 52 Hz, an initial strain of 10%, a measurement temperature of 60°C, and a dynamic strain of 1%.

(Pico Abrasion Test)

In accordance with JIS K6264-2:2005 "Pico abrasion test", measurement was made using a Pico abrasion test device at 23°C. With an inverse number of an abrasion volume of a vulcanized rubber composition of Comparative Example 1-1 to be 100, each sample was indicated in terms of index. It is indicated that the larger a value is, the more favorable a curb stone rubbing property is.

$$\text{curb stone rubbing property index} = \{(\text{abrasion volume of vulcanized rubber}$$
$$\text{composition of Comparative Example 1-1})/(\text{abrasion volume of sample vulcanized rubber}$$
$$\text{composition})\} \times 100$$

(Measurement of Volume Specific Resistance Ratio)

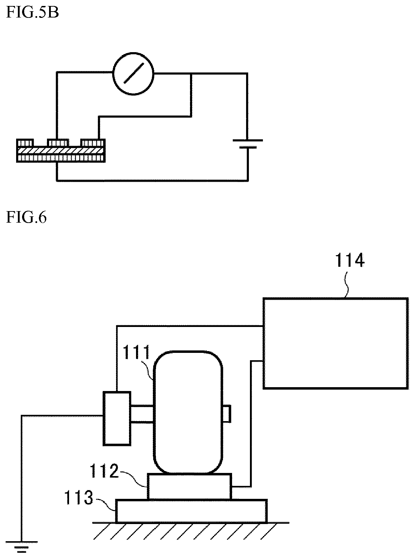

A rubber sample having a disk shape was prepared, an electric resistance value R at a portion having a radius r of 2.5 cm and a thickness t of 0.2 cm was measured using an insulation resistance test device manufactured by Advance Inc. as illustrated in FIG. 5, and a volume specific resistance ratio $\rho$ was calculated using the following equation.: $\rho = (a/t) R$.
In the equation, a is a cross-section area ($= \pi \times r^2$) and t is a thickness. Further, in the figure, A, B, C, and t respectively indicate a main electrode, a counter electrode, a guard electrode, and a thickness of the sample.

(BF Drum Test)

Using a drum test device in which a drum surface is made of smooth steel and has a diameter of 1.707 m, an ambient temperature was controlled to be 30 $\pm$ 3°C, and using a rim having a standard rim size prescribed by JATMA, at a maximum internal pressure of JATMA standard and with a load twice as large as a maximum load capacity of JATMA standard, a travel test until a failure occurs was performed. With a travel distance of a tire of Comparative Example 1-1 to be 100, each tire was indicated in terms of index. It is indicated that the higher a value is, the more excellent in durability a tire is.

(RRC Drum Test)

Each tire was mounted to a rim, a maximum load defined for each vehicle to which the tire is mounted was applied, and a rolling resistance was measured under a condition of a drum rotation speed of 100 km/h. As results, with an inverse number of a rolling resistance value of the tire of Comparative Example 1-1 to be 100, an inverse number of a rolling resistance value of each tire was indicated in terms of index. A larger number indicates excellence in rolling resistance and good fuel efficiency.

$$\text{low rolling resistance index} = \{(\text{rolling resistance value of tire of Comparative}$$
$$\text{Example 1-1})/(\text{rolling resistance value of sample vulcanized rubber composition})\} \times 100$$

(Electric Resistance of Tire)

As illustrated in FIG. 6, an electric resistance value of the tire was measured in accordance with WdK 110 sheet 3 of GERMAN ASSOCIATION OF RUBBER INDUSTRY using a model HP4394A High Resistance Meter manufactured by HEWLETT PACKARD. In FIG. 6, reference numeral 111 denotes a tire, 112 denotes a steel plate, 113 denotes an insulator, and 114 denotes a High Resistance Meter, and the measurement was made by flowing electric current of 1,000 V between the steel plate 112 on the insulator 113 and a rim of the tire 111.

[Table 1]

| | | Example 1-1 | Example 1-2 | Example 1-3 | Example 1-4 | Comparative Example 1-1 |
|---|---|---|---|---|---|---|
| Compound content (Parts by mass) | NR | 50 | 50 | 50 | 50 | 50 |
| | BR | 50 | 50 | 50 | 50 | 50 |
| | FEF*1-1 | | 70 | 65 | 65 | |
| | GPF*1-2 | 70 | | | | |
| | HAF*1-5 | | | | | 75 |
| | CNT*1-3 | 3 | | | 3 | |
| | Ketjen*1-4 | | 5 | | | |
| | Reclaimed rubber | | | 10 | 10 | |
| | Oil | 10 | 5 | | | 10 |
| | Sulfur | 3 | 3 | 3 | 3 | 3 |
| | Vulcanization accelerator | 1 | 1 | 1 | 1 | 1 |
| | Zinc oxide | 5 | 5 | 5 | 5 | 5 |
| Loss property tan $\delta$ 1% strain | | 0.19 | 0.19 | 0.19 | 0.19 | 0.23 |
| E'(MPa) | | 5.7 | 5.9 | 5.7 | 5.8 | 5.8 |
| Abrasion property (index) | | 105 | 110 | 105 | 107 | 100 |
| Electric resistance ($\Omega$*cm) | | 1*10^8 | 1*10^8 | 1*10^8 | 1*10^8 | 1*10^8 |
| Durability performance (BF drum) | | 105 | 110 | 110 | 107 | 100 |
| Low rolling resistance property (RRC drum) | | 101 | 101 | 101 | 101 | 100 |
| Tire electric resistance ($\Omega$) | | 1*10^6 | 1*10^6 | 1*10^6 | 1*10^6 | 1*10^6 |

*1-1) carbon black (FEF), nitrogen adsorption specific surface area 40 $m^2$/g
*1-2) carbon black (GPF), nitrogen adsorption specific surface area 35 $m^2$/g
*1-3) carbon nanotube (CNT)
*1-4) carbon black (ketjen black), nitrogen adsorption specific surface area 800 $m^2$/g, Ketjen black EC300J manufactured by Lion Corporation
*1-5) carbon black (HAF), nitrogen adsorption specific surface area 78 $m^2$/g

As indicated in the Table 1 above, in a sample tire of each Example in which a composite fiber containing a conductive fiber and a non-conductive fiber is arranged at least from the bead portion to a position in contact with the cushion rubber in such a manner as to be exposed on at least one surface of the carcass and the rubber chafer contains a predetermined carbon black, it was confirmed that an electric resistance of the tire was reduced while low loss was attempted and without adversely affecting other performances such as a tire durability.

[Examples 2-1 to 2-4 and Comparative Examples 2-1 to 2-5: Preparation of Rubber Composition for Tires]

Each compound dose as indicated in Table 2 below was kneaded by a Banbury mixer by a conventional method to prepare each rubber composition for tires.
With respect to each rubber composition for tires, by each method as described below, evaluation was made in terms of loss property (tan $\delta$) and storage elastic modulus (E').
Using each obtained rubber composition for tires as a coating rubber of the carcass ply having the below carcass ply cord, the pneumatic tire (test tire) having a size of 195/65R15 with a structure as illustrated in FIG. 1 was prepared.

(Carcass Ply Cord)

Cord angle: 90° (0° in the tire circumferential direction), cord material: PET

This tire was provided with a bleeder cord composed of Bekinox(registered trademark), manufactured by Bekaert Corporation, from a bead portion to a tread portion in such a manner as to be exposed on both surfaces of the carcass at the outer and inner sides of the tire. The bleeder cord was provided in such a manner as to be sewn to the carcass at an angle of 90° with respect to the tire circumferential direction and at a sewing pitch of 20 mm. Further, to the rubber chafer, a compounded rubber of Example 1-3 as indicated in the Table 1 above was applied.

With respect to each obtained test tire, similarly to Example 1-1, etc., measurement evaluation was made in terms of electric resistance, durability performance (BF drum test), and low loss performance (RRC drum). The durability performance and the low loss performance were each evaluated on the basis of Comparative Example 2-1.

The results thereof are listed in Table 2 below.

[Evaluation Method of Loss Property (tan $\delta$)]

Using a spectrometer (dynamic viscoelasticity measuring test device) manufactured by Uejima Seisakusho Co., Ltd., measurement was made at a frequency of 52 Hz, an initial strain of 10%, a measurement temperature of 60°C, and a dynamic strain of 1%, and a value of tan $\delta$ was indicated in terms of index using the equation below with tan $\delta$ of Comparative Example 2-1 to be 100. It is indicated by tan $\delta$ that the larger an index value is, the lower a heat generating property is and the smaller a hysteresis loss is.

$$\text{low heat generating property index} = \{(\tan \delta \text{ of vulcanized rubber composition of}$$

$$\text{Comparative Example 2-1)/(}\tan \delta \text{ of sample vulcanized rubber composition)}\} \times 100$$

[Evaluation Method of Storage Elastic Modulus (E')]

Using a spectrometer (dynamic viscoelasticity measuring test device) manufactured by Uejima Seisakusho Co., Ltd., measurement was made at a frequency of 52 Hz, an initial strain of 10%, a measurement temperature of 25°C, and a dynamic strain of 1%, and a value of a storage elastic modulus (E') was indicated in terms of index using the equation below with E' of Comparative Example 2-1 to be 100. It is indicated by E' that the larger an index value is, the higher an elastic modulus is.

$$\text{storage elastic modulus index} = \{(\text{E' of vulcanized rubber composition of}$$

$$\text{Comparative Example 2-1)/(E' of sample vulcanized rubber composition)}\} \times 100$$

[Table 2]

| | Example 2-1 | Example 2-2 | Example 2-3 | Example 2-4 | Comparative Example 2-1 | Comparative Example 2-2 | Comparative Example 2-3 | Comparative Example 2-4 | Comparative Example 2-5 |
|---|---|---|---|---|---|---|---|---|---|
| NR *2-1 | 70 | 70 | 70 | 70 | 70 | 70 | 70 | 70 | 30 |
| SBR *2-2 | 30 | 30 | 30 | 30 | 30 | 30 | 30 | 30 | 70 |
| Carbon black A (GPF) *2-3 | 40 | 40 | 45 | 45 | | 40 | | | 40 |
| Carbon black B (HAF) *2-4 | | | | | 45 | 20 | | | |
| Carbon nanotube (CNT) *2-5 | 3 | | | 3 | | | 0.9 | 3 | 3 |
| Ketjen black *2-6 | | 5 | | | | | | | |
| Silica *2-7 | | | | | | | 60 | 60 | |
| Silane coupling agent *2-8 | | | | | | | 6 | 6 | |
| Oil *2-9 | | | | | 10 | | | | |
| Sulfur | 3 | 3 | 3 | 3 | 3 | 3 | 3 | 3 | 3 |
| Vulcanization accelerator A *2-10 | 1 | 1 | 1 | 1 | 1 | 1 | 1 | 1 | 1 |
| Vulcanization accelerator B *2-11 | 0.8 | 0.8 | 0.8 | 0.8 | 0.8 | 0.8 | 0.8 | 0.8 | 0.8 |
| Zinc oxide | 5 | 5 | 5 | 5 | 5 | 5 | 5 | 5 | 5 |
| Loss property index | 155 | 142 | 170 | 175 | 100 | 131 | 113 | 89 | 94 |
| E'(25°C) index | 100 | 100 | 120 | 120 | 100 | 100 | 100 | 75 | 86 |
| Electric resistance ($\Omega$*cm) | $5*10^6$ | $5*10^6$ | $5*10^6$ | $5*10^6$ | $5*10^6$ | $5*10^6$ | $5*10^6$ | $5*10^6$ | $5*10^6$ |

(continued)

| | Example 2-1 | Example 2-2 | Example 2-3 | Example 2-4 | Comparative Example 2-1 | Comparative Example 2-2 | Comparative Example 2-3 | Comparative Example 2-4 | Comparative Example 2-5 |
|---|---|---|---|---|---|---|---|---|---|
| Durability performance (BF drum) | 108 | 108 | 102 | 102 | 100 | 99 | 97 | 95 | 97 |
| Low loss performance (RRC drum) | 102 | 102 | 102 | 102 | 100 | 101 | 100 | 98 | 99 |

*2-1 to *2-11 in Table 2 above are described below:

*2-1: RSS#3;

*2-2: SBR, manufactured by JSR Corporation;

*2-3: nitrogen adsorption specific surface area ($N_2SA$: 35 $m^2$/g), N660, manufactured by Asahi Carbon Co., Ltd.;

*2-4: nitrogen adsorption specific surface area ($N_2SA$: 78 $m^2$/g), N330, manufactured by Asahi Carbon Co., Ltd.;

*2-5: carbon nanotube (CNT);

*2-6: nitrogen adsorption specific surface area ($N_2SA$: 800 $m^2$/g) Ketjen black EC300J, manufactured by Lion Corporation;

*2-7: silica: "Nipsil AQ", manufactured by Tosoh Silica Corporation (BET = 200 $m^2$/g);

*2-8: silane coupling agent: "Si69" manufactured by Degussa AG;

*2-9: process oil (TDAE), manufactured by Shin Nihon Chemical Co., Ltd.;

*2-10: MBTS (di-2-benzothiazolyl disulfide); and *2-11: BBS (N-tert-butyl-2-benzothiazolylsulfenamide).

EP 3 403 854 A1

As apparent from the results of Table 2 above, it was confirmed that as compared to the pneumatic tire using the rubber composition for tires of Comparative Examples 2-1 to 2-5, the pneumatic tire using the rubber composition for tires of Examples 2-1 to 2-4 inhibits increase of an electric resistance, reduces a rolling resistance, and has an excellent durability.

[Test Example 1: Preparation of Rubber Composition for Tires]

In each rubber composition for tires of Example 2-4 and Comparative Example 2-1 as described above, let moduli of the rubber compositions X, Y, and Z elongated by 50% be Mdx, Mdy, and Mdz (MPa), respectively, and whether or not the formula (I) above is satisfied was tested.

In other words, as indicated in Tables 3 and 4 below, each modulus at 50% elongation was measured and evaluated using the measuring method below in Example 2-4, reproductions of a NR phase and a SBR phase of Example 2-4, and in Comparative Example 2-1, reproductions of a NR phase and a SBR phase of Comparative Example 2-1.

Reproductions of an NR phase and a SBR phase in Example 2-4 and Comparative Example 2-1 in Tables 3 and 4 were prepared by supposing that in each of a compound of Example 2-4 and a compound of Comparative Example 2-1, additives such as a carbon black, were evenly distributed on the basis of a polymer mass ratio and with each compound as reproduction compound.

The results thereof are listed in Tables 3 and 4 below. Further, in below Table 5, each measurement value of Tables 3 and 4, a calculation value of the whole compound by the below method, a value (Δ) of (calculation value - measurement value), and a percentage thereof (measurement value/calculation value) are indicated.

(Measuring Method of Modulus during elongation by 50%, <S-S Tensile Test>)

Using Instron-1125, under conditions of a temperature: 20 to 24°C, a tensile speed: 100 mm/min, a shape: Din 3, and a strain reading: automatic measurement, a tensile stress during elongation by 50% of each vulcanized rubber sheet: 50% modulus (S-S Mod 50%) was measured.

(Calculation Method of Calculation Value of Whole Compound in Table 5)

Compounds reproducing an NR phase and a SBR phase in the Example and the Comparative Example were kneaded and 50% modulus each thereof was measured. By supposing that in a compound content, rubber agents such as CB and a vulcanization accelerator were compounded in proportion to a mass ratio of NR and SBR, reproduction compounds were prepared. By multiplying each 50% modulus obtained by the measurement by a compound ratio of NR and SBR in Example 2-4 or Comparative Example 2-1 (e.g., in Example 2-4, 0.7 for NR and 0.3 for SBR), a calculation value (predicted value) of a 50% modulus in the whole compound was calculated.

[Table 3]

| | Reproduction of NR phase | Reproduction of SBR phase | Example 2-4 |
|---|---|---|---|
| NR *2-1 | 70 | | 70 |
| SBR *2-2 | | 30 | 30 |
| Carbon black A(GPF) *2-3 | 31.5 | 13.5 | 45 |
| Carbon black B(HAF) *2-4 | | | |
| Carbon nanotube (CNT) *2-5 | 3 | | 3 |
| Ketjen black *2-6 | | | |
| Silica *2-7 | | | |
| Silane coupling agent *2-8 | | | |
| Oil *2-9 | | | |
| Sulfur | 2.1 | 0.9 | 3 |
| Vulcanization accelerator A *2-10 | 0.7 | 0.3 | 1 |
| Vulcanization accelerator B *2-11 | 0.56 | 0.24 | 0.8 |
| Zinc oxide | 3.5 | 1.5 | 5 |

(continued)

|  | Reproduction of NR phase | Reproduction of SBR phase | Example 2-4 |
|---|---|---|---|
| Distribution ratio of carbon black, etc. (%) | 70 | 30 | 100 |
| S-S Mod50% | 1.49 | 1.42 | 1.3 |

[Table 4]

|  | Reproduction of NR phase | Reproduction of SBR phase | Comparative Example 2-1 |
|---|---|---|---|
| NR *2-1 | 70 |  | 70 |
| SBR *2-2 |  | 30 | 30 |
| Carbon black A(GPF) *2-3 |  |  |  |
| Carbon black B(HAF) *2-4 | 31.5 | 13.5 | 45 |
| Carbon nanotube (CNT) *2-5 |  |  |  |
| Ketjen black *2-6 |  |  |  |
| Silica *2-7 |  |  |  |
| Silane coupling agent *2-8 |  |  |  |
| Oil *2-9 | 3 | 7 | 10 |
| Sulfur | 0.9 | 2.1 | 3 |
| Vulcanization accelerator A *2-10 | 0.3 | 0.7 | 1 |
| Vulcanization accelerator B *2-11 | 0.56 | 0.24 | 0.8 |
| Zinc oxide | 1.5 | 3.5 | 5 |
| Distribution ratio of carbon black, etc. (%) | 70 | 30 | 100 |
| S-S Mod50% | 1.5 | 1.5 | 1.4 |

[Table 5]

| | Reproduction of NR phase | Reproduction of SBR phase | Whole compound (measurement) | Whole compound (calculation) | Δ (measurement value – calculation value) | Percentage (measurement value/ calculation value) |
|---|---|---|---|---|---|---|
| Carbon black A(GPF): Mod50% | 1.49 | 1.42 | 1.3 | 1.469 | -0.169 | 88% |
| Carbon black B(HAF): Mod50% | 1.5 | 1.5 | 1.4 | 1.5 | -0.1 | 93% |

As apparent from the results of Tables 3 to 5 above, it can be considered that as compared to a conventional high carbon black and silica compound, Examples 2-1 to 2-4 using a carbon having a large particle diameter are excellent in loss property and further adding a conductive material allows excellent loss property and conductivity to be compatible.

DESCRIPTION OF SYMBOLS

| 1 | carcass |
|---|---|
| 1A | main body portion |
| 1B | turn-up portion |
| 2 | belt layer |
| 3 | composite fiber |
| 3a | needle thread |
| 3b | bobbin thread |
| 4 | rubber chafer |
| 5 | conductive rubber portion |
| 6 | bead core |
| 7 | bead filler |
| 11 | bead portion |
| 12 | side wall portion |
| 13 | tread portion |
| 13G | tread rubber |
| 13C | cushion rubber |
| 14 | belt under cushion |
| 15 | side rubber |
| 20 | rim |
| 21 | carcass treatment |
| 111 | tire |

112     steel plate
113     insulator
114     High Resistance Meter

**Claims**

1. A pneumatic tire comprising: a carcass, as a skeletal structure, composed of at least one carcass ply extending toroidally between a pair of bead portions; and at least one belt layer provided at an outer side of a crown portion of the carcass in a tire radial direction, in which a rubber chafer is provided at an outer surface of the bead portion in a tire width direction,
wherein a cushion rubber and a tread rubber forming a tread portion are sequentially provided at an outer side of the belt layer in the tire radial direction, and a composite fiber containing a conductive fiber and a non-conductive fiber extends at least from the bead portion to a position in contact with the cushion rubber or a belt under cushion arranged at an outer end portion of the belt layer in the tire width direction in such a manner as to be exposed on at least one surface of the carcass at either the outer and inner sides of the tire, and the rubber chafer contains a carbon black having a nitrogen adsorption specific surface area of 30 to 43 m$^2$/g.

2. The pneumatic tire according to claim 1, wherein the rubber chafer contains a reclaimed rubber.

3. The pneumatic tire according to claim 1, wherein the rubber chafer contains 64 to 73 parts by mass of the carbon black per 100 parts by mass of rubber components.

4. The pneumatic tire according to claim 2, wherein 3 to 10 parts by mass of the reclaimed rubber are contained per 100 parts by mass of rubber components of the rubber chafer.

5. The pneumatic tire according to claim 1, wherein the composite fiber is arranged in such a manner as to be exposed on both surfaces of the carcass at the outer and inner sides of the tire.

6. The pneumatic tire according to claim 1, wherein a portion at which the composite fiber is exposed on a tire outer side and a portion at which the composite fiber is exposed on a tire inner side are connected with each other at least one location.

7. The pneumatic tire according to claim 1, wherein the non-conductive fiber is made of an organic material and the composite fiber contains 50% by mass or more of the non-conductive fiber.

8. The pneumatic tire according to claim 1, wherein the composite fiber is sewn to the carcass.

9. The pneumatic tire according to claim 8, wherein a sewing pitch of the composite fiber is 2 to 40 mm.

10. The pneumatic tire according to claim 1, wherein the composite fiber is wound around the carcass.

11. The pneumatic tire according to claim 10, wherein the composite fiber is wound around the carcass from a position in contact with one end of the cushion rubber or the belt under cushion in the tire width direction via the bead portion through a tire inner side of the carcass to the other end of the cushion rubber or the belt under cushion in the tire width direction.

12. The pneumatic tire according to claim 10, wherein a rubber chafer is provided at an outer surface of the bead portion in the tire width direction, the carcass includes a main body portion extending between the pair of bead portions and turn-up portions each turned up and curled up from the inside to the outside of the tire around a bead core embedded in each of the pair of bead portions, and the composite fiber is wound around the carcass from a position outside of one turn-up portion in the tire width direction and in contact with the rubber chafer via an inner side of the turn-up portion in the tire width direction and an outer side of the main body portion in the tire width direction through a tire outer side of the carcass to a position outside of the other turn-up portion in the tire width direction and in contact with the rubber chafer.

13. The pneumatic tire according to claim 10, wherein the composite fiber is spirally wound around the carcass.

14. The pneumatic tire according to claim 10, wherein a winding pitch of the composite fiber is 1 to 12 times/m.

15. The pneumatic tire according to claim 1, wherein the composite fiber is arranged in a tire circumferential direction at an end count of 0.04 times/5 cm or more.

16. The pneumatic tire according to claim 1, wherein a bleeder cord is disposed at least from the bead portion to a position in contact with the cushion rubber or the belt under cushion, and the composite fiber is arranged in place of 3 to 100% by mass of the bleeder cord.

17. The pneumatic tire according to claim 1, wherein a fineness of the composite fiber is 20 to 1,000 dtex.

18. The pneumatic tire according to claim 1, wherein the composite fiber is arranged at an angle of 30 to 150° with respect to a tire circumferential direction.

19. The pneumatic tire according to claim 18, wherein the composite fiber is arranged at an angle of 50 to 130° with respect to the tire circumferential direction.

20. The pneumatic tire according to claim 1, wherein the conductive fiber contains at least one of a metal-containing fiber, a carbon-containing fiber, and a metal oxide-containing fiber.

21. The pneumatic tire according to claim 1, wherein the non-conductive fiber contains at least one of cotton, nylon, polyester, and polypropylene.

22. The pneumatic tire according to claim 1, wherein a break elongation Eb of the composite fiber is 5% or more.

23. The pneumatic tire according to claim 1, wherein a resistance value of the composite fiber is $1.0 \times 10^7$ $\Omega$/cm or less.

24. The pneumatic tire according to claim 1, wherein the rubber chafer contains 0.5 to 4 parts by mass of a carbon nanotube per 100 parts by mass of rubber components.

25. The pneumatic tire according to claim 1, wherein at least one member of a ply coating rubber of the carcass ply, a belt coating rubber of the belt layer, a squeegee rubber between the carcass plies, the cushion rubber, the belt under cushion, and a bead filler rubber arranged at an outer side of a bead core in the tire radial direction embedded in each of the pair of bead portions uses a rubber composition for tires in which 35 to 50 parts by mass of a carbon black having a nitrogen adsorption specific surface area ($N_2SA$) of 30 to 43 $m^2$/g and 5 parts by mass or less of an oil are blended per 100 parts by mass of rubber components containing 20 to 40 parts by mass of a styrene-butadiene rubber and 60 to 80 parts by mass of a natural rubber.

26. The pneumatic tire according to claim 25, wherein the rubber composition for tires contains 0.1 to 6 parts by mass of at least one of a ketjen black and a carbon nanotube per 100 parts by mass of the rubber components.

27. The pneumatic tire according to claim 26, wherein the rubber composition for tires contains 2 to 15% by mass of at least one of the ketjen black and the carbon nanotube per a filling material.

28. The pneumatic tire according to claim 25, wherein when an amount of a compounded styrene-butadiene rubber is A parts by mass and an amount of a compounded natural rubber is B parts by mass in the rubber composition for tires, and
when a rubber composition in which, in contrast with the A parts by mass of the styrene-butadiene rubber, A*100/(A + B) (% by mass) of a carbon black having a nitrogen adsorption specific surface area ($N_2SA$) of 30 to 43 $m^2$/g is contained in the rubber composition for tires is defined as a rubber composition X;
a rubber composition in which, in contrast with the B parts by mass of the natural rubber, B*100/(A + B) (% by mass) of a carbon black having a nitrogen adsorption specific surface area ($N_2SA$) of 30 to 43 $m^2$/g is contained in the rubber composition for tires is defined as a rubber composition Y; and
the rubber composition for tires is defined as a rubber composition Z,
let moduli of the rubber compositions X, Y, and Z elongated by 50% be Mdx, Mdy, and Mdz (MPa), respectively, Mdx, Mdy, and Mdz satisfy formula (I) below:

$$0.9 \times \{Mdx * A/(A + B) + Mdy*B/(A + B)\} \geq Mdz \qquad (I).$$

FIG.1

FIG.2A

FIG.2B

FIG.2C

FIG.2D

FIG.2E

FIG.2F

FIG.2G

21

3

FIG.3

CL

5    13    13G    13C    2

1

12

3

1A

1B

7

4

11

20

6

FIG.4

FIG.5A

FIG.5B

FIG.6

FIG.7

FIG.8

FIG.9

FIG.10

## INTERNATIONAL SEARCH REPORT

| International application No. |
|---|
| PCT/JP2017/001138 |

**A. CLASSIFICATION OF SUBJECT MATTER**
*B60C15/06*(2006.01)i, *B60C1/00*(2006.01)i, *B60C9/00*(2006.01)i,
*B60C9/18*(2006.01)i, *B60C11/00*(2006.01)i, *B60C19/00*(2006.01)i,
*B60C19/08*(2006.01)i, *C08K3/04*(2006.01)i, *C08L17/00*(2006.01)i,
According to International Patent Classification (IPC) or to both national classification and IPC

**B. FIELDS SEARCHED**

Minimum documentation searched (classification system followed by classification symbols)
B60C15/06, B60C1/00, B60C9/00, B60C9/18, B60C11/00, B60C19/00, B60C19/08,
C08K3/04, C08L17/00, D02G3/44, D07B1/02

Documentation searched other than minimum documentation to the extent that such documents are included in the fields searched
Jitsuyo Shinan Koho          1922–1996   Jitsuyo Shinan Toroku Koho   1996–2017
Kokai Jitsuyo Shinan Koho    1971–2017   Toroku Jitsuyo Shinan Koho   1994–2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2015-120446 A  (The Yokohama Rubber Co., Ltd.), | 1,3,5-15, 17-23 |
| A | 02 July 2015 (02.07.2015), claims 1 to 9; paragraphs [0042], [0043], [0045]; examples 1 to 9; fig. 1 to 7 (Family: none) | 2,4,16,24-28 |
| Y | JP 2013-151583 A  (Bridgestone Corp.), 08 August 2013 (08.08.2013), | 1,3,5-15, 17-23 |
| A | claims 1 to 16; paragraphs [0021], [0134]; example 1 (Family: none) | 2,4,16,24-28 |

☒ Further documents are listed in the continuation of Box C.   ☐ See patent family annex.

| | | |
|---|---|---|
| * | Special categories of cited documents: | |
| "A" | document defining the general state of the art which is not considered   to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 28 March 2017 (28.03.17) | 11 April 2017 (11.04.17) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

**INTERNATIONAL SEARCH REPORT**

International application No.

PCT/JP2017/001138

C (Continuation). DOCUMENTS CONSIDERED TO BE RELEVANT

| Category* | Citation of document, with indication, where appropriate, of the relevant passages | Relevant to claim No. |
|---|---|---|
| A | JP 2015-171848 A (Sumitomo Rubber Industries, Ltd.), 01 October 2015 (01.10.2015), fig. 1 to 5 (Family: none) | 1-28 |
| A | JP 2014-136713 A (Sumitomo Rubber Industries, Ltd.), 28 July 2014 (28.07.2014), claims 1 to 4; examples 1 to 19; fig. 1 to 4 & US 2014/0196828 A1 claims 1 to 4; examples 1 to 19; fig. 1 to 4 & CN 103923356 A | 1-28 |
| A | JP 2001-226526 A (Sumitomo Rubber Industries, Ltd.), 21 August 2001 (21.08.2001), table 2; comparative example 6 & US 2001/0018944 A1 table 2; comparative example 6 & EP 1125976 A1 | 1-28 |
| A | JP 2014-125005 A (Toyo Tire and Rubber Co., Ltd.), 07 July 2014 (07.07.2014), fig. 1 to 7 & US 2014/0174612 A1 fig. 1 to 7 & DE 102013113935 A & CN 103895455 A | 1-28 |

Form PCT/ISA/210 (continuation of second sheet) (January 2015)

**INTERNATIONAL SEARCH REPORT**

International application No.

PCT/JP2017/001138

Continuation of A. CLASSIFICATION OF SUBJECT MATTER
(International Patent Classification (IPC))

*D02G3/44*(2006.01)i, *D07B1/02*(2006.01)i

(According to International Patent Classification (IPC) or to both national classification and IPC)

Form PCT/ISA/210 (extra sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H3169711 A
- JP 2010116447 A